# EUROPÄISCHE PATENTSCHRIFT

(11) **EP 2 990 646 B1**
(45) Veröffentlichungstag und Bekanntmachung des Hinweises auf die Patenterteilung: **01.05.2019**
(21) Anmeldenummer: 14183097.6
(22) Anmeldetag: 01.09.2014
(51) Int. Cl.: F04B 25/00, F04B 41/06, F04D 25/06, F04D 25/16, B60T 17/02

(54) **Fahrzeug und Verdichteranordnung**
Vehicle and compressor assembly
Véhicule et système d'étanchéification

(43) Veröffentlichungstag der Anmeldung: 02.03.2016
(73) Patentinhaber: Nabtesco ITG GmbH, 09125 Chemnitz (DE)
(72) Erfinder: Bredel, Eberhard, 09437 Börnichen (DE)
(74) Vertreter: Lippert Stachow Dresden

(56) Entgegenhaltungen:
- EP-A1- 1 419 949
- DE-A1-102009 038 786
- FR-A1- 2 368 621

## Beschreibung

Die Erfindung betrifft eine Verdichteranordnung zur Erzeugung von Druckluft für Anwendungen in der Industrie und in Fahrzeugen, sowie ein Fahrzeug mit einer derartigen Verdichteranordnung.

Bekannt sind 2-stufig arbeitende Mehrzylinder-Hubkolbenkompressoren mit Anwendung in der Industrie und der Fahrzeugtechnik. Der Antrieb der Kompressoren kann dabei mechanisch, elektrisch, hydraulisch oder pneumatisch erfolgen.

Die Auslegung der Kompressoren, d.h. die Baugröße, die indirekt auch ein Maß für die Kosten und den Energiebedarf darstellt, wird im Wesentlichen bestimmt durch den Luftbedarf (l/min), die zur Verfügung stehende Drehzahl des Hauptkompressors sowie den zur Verfügung stehenden Bauraum.

Beim Luftbedarf wird dabei bei bekannten Lösungen immer von einem zu erwartenden Spitzenbedarf ausgegangen, damit dieser zuverlässig bereitgestellt werden kann. Dadurch ist der Kompressor in der Regel für den mittleren Bedarf zu groß ausgelegt, was sich in relativ hohen Kosten, hohem Gewicht und einem relativ großen Energiebedarf niederschlägt.

Als Beispiel soll hier die Anwendung LKW-Wechselpritschenfahrzeug angeführt werden. Im normalen Fahrbetrieb wird die Druckluft für die Druckluftverbraucher wie Druckluftbremse, Druckluftfederung und einige Nebenaggregate, wie Schaltgetriebe usw., benötigt. Beim Wechseln der Auflieger am Be- und Entladeort muss das Fahrzeug abgesenkt bzw. angehoben werden. Das geschieht ebenfalls mit Druckluft. Dieser Vorgang erfordert einen hohen Luftbedarf innerhalb kürzester Zeit. Die mitgeführten Druckluftbehälter am LKW können diesen Luftbedarf nicht decken. Aus diesem Grund kommen für diese Anwendung z.B. sehr große zweistufig arbeitende Dreizylinder-Hubkolbenkompressoren zum Einsatz, obwohl deren maximale Leistung nur sehr selten benötigt wird.

Dabei muss die erste Stufe aufgrund des großen zu komprimierenden Volumens sehr groß sein, was sich in einem hohen Gewicht niederschlägt. Die zweite Stufe muss gegen den sehr hohen Enddruck arbeiten. Derartige Kompressoren sind daher üblicherweise wassergekühlt und geschmiert.

Aus DE 10 2009 038 786 A1 ist ein Verdichter mit mindestens zwei Stufen bekannt, bei dem die erste Stufe mindestens zwei parallel zueinander betriebene Verdichtungsmodule aufweist, wobei das erste Verdichtungsmodul einen ersten Prozessgasstrom und das zweite Verdichtungsmodul einen zweiten Prozessgasstrom verdichtet, welche stromabwärts der ersten Stufe vor Eintritt in die zweite Stufe zusammengeführt werden, wobei die zweite Stufe nur ein Verdichtungsmodul aufweist.

Eine Aufgabe der Erfindung besteht daher in der Effizienzsteigerung, Kostensenkung und Energieeinsparung von Druckluftsystemen.

Diese Aufgabe wird gelöst durch eine Verdichteranordnung mit den Merkmalen des Anspruchs 1 sowie durch ein Fahrzeug mit den Merkmalen des Anspruchs 9.

Vorgeschlagen wird eine Verdichteranordnung zur Verdichtung eines Volumenstroms eines kompressiblen Mediums von einem Anfangsdruck auf einen zum Anfangsdruck höheren Enddruck, der einen mehrstufigen ersten Verdichter zur Verdichtung eines ersten Teilvolumenstroms des kompressiblen Mediums von dem Anfangsdruck auf den Enddruck mit mindestens einer stromaufwärts angeordneten ersten Verdichterstufe und mindestens einer stromabwärts angeordneten zweiten Verdichterstufe umfasst, wobei jede Verdichterstufe einen Medieneintritt zum Ansaugen des Mediums und einen Medienaustritt zum Ausstoßen des Mediums aufweist, und wobei der Medienaustritt einer Verdichterstufe mit dem Medieneintritt der stromabwärts nächsten Verdichterstufe durch eine Zwischenkammer verbunden ist und sich in jeder Zwischenkammer jeweils ein Zwischendruck des ersten Teilvolumenstroms einstellt, wobei der erste Verdichter ein zweistufiger Kolbenverdichter ist und ein zweiter Verdichter mit mindestens einer, einen Medieneintritt und einen Medienaustritt aufweisenden, Verdichterstufe zur Verdichtung eines zweiten Teilvolumenstroms des Mediums auf einen Zwischendruck des ersten Teilvolumenstroms vorgesehen ist, wobei mindestens ein Medienaustritt des zweiten Verdichters mit einer Zwischenkammer des ersten Verdichters verbunden ist.

Dabei kann der zweite Verdichter beispielsweise ein einstufiger Kolbenverdichter sein.

Sowohl der erste Verdichter als auch der zweite Verdichter können jeweils mechanisch, d.h. durch direktes Anlegen eines Drehmoments, oder elektrisch, hydraulisch oder pneumatisch, d.h. beispielsweise durch einen Elektromotor, Ölmotor oder Luftmotor angetrieben sein, wobei diese Antriebskomponenten auch in den jeweiligen Verdichter integriert sein können.

Insbesondere bei Verwendung der Verdichteranordnung in einem Fahrzeug kann vorteilhaft vorgesehen sein, dass der erste Verdichter mechanisch und der zweite Verdichter elektrisch angetrieben ist, beispielsweise indem der erste Verdichter in den Antriebsstrang des Fahrzeugs integriert ist und durch die vom Antriebsaggregat bereitgestellte Leistung angetrieben wird, und weiter beispielsweise indem der zweite Verdichter in das Bordnetz des Fahrzeugs integriert ist und durch die vom Bordnetz bereitgestellte elektrische Leistung angetrieben wird, so dass bedarfsweise ein schnelles Zu- und Abschalten des zweiten Verdichters möglich ist.

Zur Lösung der Aufgabe wird weiterhin ein Fahrzeug vorgeschlagen, das einen Antriebsstrang mit einem Antriebsaggregat zur Bereitstellung von mechanischer und elektrischer Leistung, welches durch Drehmomentübertragungsmittel mit den Rädern des Fahrzeugs verbunden ist, eine mit der bereitgestellten Leistung betreibbare Druckluftversorgungseinrichtung sowie mit der Druckluftversorgungseinrichtung verbundene Druckluftverbraucher umfasst, wobei die Druckluftversorgungseinrichtung eine Verdichteranordnung der oben beschriebenen Art aufweist. Das kompressible Medium ist in diesem Fall Luft, die aus der Umgebung angesaugt, verdichtet und den Druckluftverbrauchern des Fahrzeugs bereitgestellt wird.

Unter dem Antriebsstrang eines Fahrzeuges werden in der Kraftfahrzeugtechnik alle Komponenten verstanden, die im Fahrzeug zur Erzeugung und Übertragung des Drehmoments auf die Straße dienen, d.h. beispielsweise ein Verbrennungsmotor, eine Kupplung, ein Fahrzeuggetriebe, Gelenkwellen, Differentialgetriebe, die Antriebswellen oder Steckachsen sowie die Räder. Darüber hinaus weisen Fahrzeuge üblicherweise ein Bordnetz auf, das einen Generator, einen elektrischen Energiespeicher, beispielsweise einen Akkumulator, sowie elektrische Verbraucher umfasst, die mittels Leitungen untereinander verbunden sind, wobei der Generator üblicherweise mechanisch in den Antriebsstrang eingebunden ist, d.h. von dem Verbrennungsmotor angetrieben ist.

Vorteilhaft ist dabei vorgesehen, dass der erste Verdichter mechanisch in den Antriebsstrang eingebunden ist und der zweite Verdichter elektrisch in das Bordnetz eingebunden ist, so dass der erste Verdichter direkt mit dem Drehmoment des Antriebsaggregats versorgt wird und der zweite Verdichter schnell und einfach zugeschaltet werden kann, wenn ein erhöhter Druckluftbedarf auftritt.

Es versteht sich jedoch von selbst, dass der zweite Verdichter nicht notwendigerweise elektrisch angetrieben sein muss, sondern ebensogut mechanisch, hydraulisch oder pneumatisch angetrieben sein kann, solange der zweite Verdichter unabhängig vom ersten Verdichter betreibbar ist. Besonders vorteilhaft ist es, wenn der zweite Verdichter mit einer im Vergleich zum ersten Verdichter deutlich höheren Drehzahl betreibbar ist.

Bei einer beispielhaften Motordrehzahl im Bereich zwischen 600 und 1700 U/min und einem beispielhaften Übersetzungsverhältnis zwischen Motor und erstem Verdichter (Hauptkompressor) von 1:1,4 würde der erste Verdichter bei einer Motordrehzahl von 1000 U/min. mit 1400 U/min. laufen. Dieser erste Verdichter ist geeignet, eine ausreichende Luftmenge für den mittleren Bedarf an Druckluft bereitzustellen, d.h. für den Bedarf des Fahrzeugs ohne nur ausnahmsweise auftretende Spitzenbedarfe.

Wenn der zweite Verdichter (Nebenkompressor) wie hier vorgeschlagen unabhängig vom ersten Verdichter (Hauptkompressor), insbesondere mit einer deutlich höheren Drehzahl betreibbar ist, so führt dies, wenn der zweite Verdichter vorschlagsgemäß in eine Zwischenkammer des ersten Verdichters hinein verdichtet, dazu, dass der Nebenkompressor einerseits relativ geringe Volumina verdichten muss und andererseits gegen einen relativ geringen Druck arbeiten muss. Beide Tatsachen führen dazu, dass der zweite Verdichter extrem klein und leicht sowie gegebenenfalls ohne Kühlung und ohne Schmierung ausgeführt werden kann.

Die Erfindung kann beispielsweise dadurch realisiert werden, dass ein heute üblicher zweistufiger Kolbenverdichter eines Nutzfahrzeugs, der in den Antriebsstrang eingebunden ist, durch einen sehr kleinen, elektrisch angetriebenen, schnell (beispielsweise mit 6000 U/min.) laufenden, ungekühlten und ungeschmierten zweiten Verdichter ergänzt wird, der Luft komprimiert und in eine Zwischenkammer zwischen der ersten und zweiten Verdichterstufe des ersten Verdichters hinein fördert. Der zweite Verdichter kann dabei beispielsweise so ausgeführt sein wie die Kompressoren, die heute bei sogenannten Pannensets verwendet werden, die anstelle eines Ersatzrades mitgeführt werden. Derartige Kompressoren sind als Standardteil erhältlich, sehr preiswert und leicht. Sie sind unabhängig vom ersten Verdichter betreibbar, laufen mit sehr hohen Drehzahlen und können so einen zweistufigen ersten Verdichter, der für sich genommen nur mittlere Luftbedarfe abdecken kann, so ergänzen, dass die gesamte Druckluftversorgungseinrichtung bedarfsweise schlagartig auch Spitzenbedarfe abdeckt.

Die Druckluftversorgungseinrichtung kann weiterhin einen Druckluftbehälter zur Speicherung von Druckluft mit Enddruck aufweisen. In diesem Fall ist der Medienaustritt der stromabwärts letzten Verdichterstufe des ersten Verdichters pneumatisch mit dem Druckluftbehälter verbunden und befüllt diesen mit der erzeugten Druckluft. Aus dem Druckluftbehälter werden die Druckluftverbraucher mit Druckluft gespeist.

Weiter kann vorgesehen sein, dass der zweite Verdichter automatisch zugeschaltet wird, wenn der kumulierte Druckluftbedarf der Druckluftverbraucher einen vorgebbaren Schwellwert überschreitet.

Der Erfindung liegt der Ansatz zu Grunde, dass in eine Zwischenkammer eines mindestens zweistufig arbeitenden ersten Verdichters, beispielsweise eines Hubkolbenkompressors, durch einen kleinen einstufig arbeitenden zweiten Verdichter oder Nebenkompressor zusätzliche Luft eingeblasen und damit die Förderleistung des Hauptkompressors zur Deckung eines Spitzenbedarfes erhöht wird.

Bei Nutzung der Erfindung können sowohl die spezifischen Investitionskosten als auch die spezifischen Betriebskosten gesenkt werden.

Der durchschnittliche Luftbedarf wird durch einen kleineren zweistufig arbeitenden Zweizylinderhauptkompressor abgedeckt. Der Spitzenbedarf wird durch Zuschaltung eines kleinen Nebenkompressors, der mit hoher Drehzahl arbeitet, abgedeckt. Die Einschaltdauer dieses Nebenkompressors ist nur ein geringer Bruchteil von der Einschaltdauer des Hauptkompressors.

### Zusammenfassung:

1. Einschaltung des Nebenkompressors nur zur Abdeckung des Spitzenbedarfes.
2. Der Nebenkompressor muss, da er in die Zwischenkammer des Hauptkompressors fördert, nur ca. die Hälfte des Enddruckes der gesamten Anlage aufbringen. Die Druckerhöhung bis auf den Enddruck der Anlage übernimmt die 2. Stufe des Hauptkompressors.
3. Die Baugröße des Nebenkompressors kann sehr klein gehalten werden, da hinsichtlich Drehzahl andere Freiheitsgrade bestehen und die Förderleistung direkt proportional zur Drehzahl ist.
4. Der Nebenkompressor arbeitet energetisch deutlich effizienter (kleine Baugröße, geringe Gegendrücke).
5. Das Gesamtsystem der Verdichteranordnung, das aus erstem Verdichter (Hauptkompressor) und zweitem Verdichter (Nebenkompressor) besteht, kann mit standardisierten Baugruppen realisiert werden. Die Herstellkosten des Druckluftsystems, bestehend aus einem relativ kleinen Hauptkompressor und einem Nebenkompressor zur Abdeckung der Spitzenlast, der außerdem nur gegen einen niedrigeren Druck als den Systemdruck der Gesamtanlage arbeiten muss, sind deutlich geringer als ein spezieller großer Hauptkompressor, der überwiegend nur mit geringem Auslastungsgrad arbeitet.

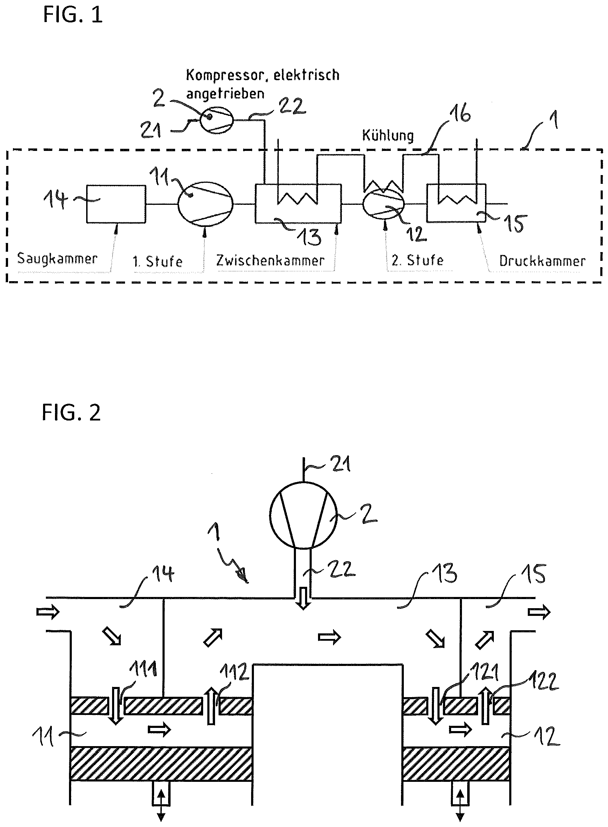

Nachfolgend wird die Erfindung anhand von Ausführungsbeispielen und zugehörigen Zeichnungen näher erläutert. Dabei zeigen
Fig. 1 den schematischen Aufbau der vorgeschlagenen Verdichteranordnung, und
Fig. 2 eine konkrete Ausgestaltung der Verdichteranordnung gemäß Fig. 1.

Ein erster Verdichter 1 weist zwei Verdichterstufen, nämlich eine erste Verdichterstufe 11 und eine zweite Verdichterstufe 12, auf. Vor (d.h. stromaufwärts) der ersten Verdichterstufe 11 befindet sich eine Saugkammer 14, in der der Anfangsdruck herrscht, und hinter (d.h. stromabwärts) der zweiten Verdichterstufe 12 befindet sich eine Druckkammer 15, in der der gewünschte Enddruck herrscht. Zwischen erster Verdichterstufe 11 und zweiter Verdichterstufe 12 ist eine Zwischenkammer angeordnet, in der ein Zwischendruck herrscht.

Die erste Verdichterstufe 11 weist einen Medieneintritt 111 in Form eines Saugventils und einen Medienaustritt 112 in Form eines Druckventils auf und die zweite Verdichterstufe 12 weist einen Medieneintritt 121 in Form eines Saugventils und einen Medienaustritt 122 in Form eines Druckventils auf.

Das zu komprimierende Medium, genauer ein erster Teilvolumenstrom des zu komprimierenden Mediums, tritt von der Saugkammer 14 durch den Medieneintritt 111 in die erste Verdichterstufe 11 des ersten Verdichters 1 ein, verlässt die erste Verdichterstufe 11 durch den Medienaustritt 112 und gelangt dadurch in die Zwischenkammer 13.

Die Zwischenkammer 13, die zweite Verdichterstufe 12 und die Druckkammer 15 sind durch eine Kühleinrichtung 16 gekühlt.

Ein zweiter Verdichter 2, der unabhängig vom ersten Verdichter 1 betreibbar und bedarfsweise zu- und abschaltbar ist, ist ausgangsseitig mit der Zwischenkammer 13 des ersten Verdichters verbunden und lädt damit die zweite Verdichterstufe 12 des ersten Verdichters 1 auf, so dass ein zweiter Teilvolumenstrom des zu komprimierenden Mediums in die Zwischenkammer 13 gelangt.

Der Gesamtvolumenstrom aus erstem Teilvolumenstrom und zweitem Teilvolumenstrom tritt durch den Medieneintritt 121 in die zweite Verdichterstufe des ersten Verdichters ein, , die eingangsseitig mit der Zwischenkammer 13 verbunden ist, wird dort komprimiert und tritt mit Enddruck durch den Medienaustritt 122 der zweiten Verdichterstufe 12 in die Druckkammer 15 aus.

### Bezugszeichenliste

- 1: erster Verdichter
- 11: erste Verdichterstufe
- 111: Medieneintritt
- 112: Medienaustritt
- 12: zweite Verdichterstufe
- 121: Medieneintritt
- 122: Medienaustritt
- 13: Zwischenkammer
- 14: Saugkammer
- 15: Druckkammer
- 16: Kühleinrichtung
- 2: zweiter Verdichter
- 21: Medieneintritt
- 22: Medienaustritt

## Patentansprüche

1. Verdichteranordnung zur Verdichtung eines Volumenstroms eines kompressiblen Mediums von einem Anfangsdruck auf einen zum Anfangsdruck höheren Enddruck, umfassend
• einen mehrstufigen ersten Verdichter (1) zur Verdichtung eines ersten Teilvolumenstroms des kompressiblen Mediums von dem Anfangsdruck auf den Enddruck mit mindestens einer stromaufwärts angeordneten ersten Verdichterstufe (11) und mindestens einer stromabwärts angeordneten zweiten Verdichterstufe (12),
• wobei jede Verdichterstufe (11, 12) einen Medieneintritt (111, 121) zum Ansaugen des Mediums und einen Medienaustritt (112, 122) zum Ausstoßen des Mediums aufweist, und
• wobei der Medienaustritt (112) einer ersten Verdichterstufe (11) mit dem Medieneintritt (121) der stromabwärts nächsten zweiten Verdichterstufe (12) durch eine Zwischenkammer (13) verbunden ist und sich in jeder Zwischenkammer (13) jeweils ein Zwischendruck des ersten Teilvolumenstroms einstellt,
**dadurch gekennzeichnet, dass**
der erste Verdichter (1) ein zweistufiger Kolbenverdichter ist, und
ein zweiter Verdichter (2) mit mindestens einer, einen Medieneintritt (21) und einen Medienaustritt (22) aufweisenden, Verdichterstufe zur Verdichtung eines zweiten Teilvolumenstroms des Mediums auf einen Zwischendruck des ersten Teilvolumenstroms vorgesehen ist, wobei mindestens ein Medienaustritt (22) des zweiten Verdichters (2) mit einer Zwischenkammer (13) des ersten Verdichters (1) verbunden ist.

2. Verdichteranordnung nach Anspruch 1, **dadurch gekennzeichnet, dass** der zweite Verdichter (2) unabhängig vom ersten Verdichter (1) betreibbar ist.

3. Verdichteranordnung nach Anspruch 1 oder 2, **dadurch gekennzeichnet, dass** der zweite Verdichter (2) ungekühlt und ungeschmiert ist.

4. Verdichteranordnung nach einem der vorherigen Ansprüche, **dadurch gekennzeichnet, dass** der zweite Verdichter (2) mit einer Drehzahl betreibbar ist, die mindestens doppelt so groß ist wie die Drehzahl des ersten Verdichters (1).

5. Verdichteranordnung nach einem der vorherigen Ansprüche, **dadurch gekennzeichnet, dass** der erste Verdichter (1) mechanisch oder elektrisch oder hydraulisch oder pneumatisch angetrieben ist.

6. Verdichteranordnung nach einem der vorherigen Ansprüche, **dadurch gekennzeichnet, dass** der zweite Verdichter (2) ein einstufiger Kolbenverdichter ist.

7. Verdichteranordnung nach einem der vorherigen Ansprüche, **dadurch gekennzeichnet, dass** der zweite Verdichter (2) mechanisch oder elektrisch oder hydraulisch oder pneumatisch angetrieben ist.

8. Verdichteranordnung nach einem der vorherigen Ansprüche, **dadurch gekennzeichnet, dass** der erste Verdichter (1) mechanisch und der zweite Verdichter (2) elektrisch angetrieben ist.

9. Fahrzeug mit Rädern, umfassend
• einen Antriebsstrang mit einem Antriebsaggregat zur Bereitstellung von mechanischer und elektrischer Leistung, das durch Drehmomentübertragungsmittel mit den Rädern des Fahrzeugs verbunden ist,
• eine mit der bereitgestellten Leistung betreibbare Druckluftversorgungseinrichtung sowie
• mit der Druckluftversorgungseinrichtung verbundene Druckluftverbraucher,
**dadurch gekennzeichnet, dass** die Druckluftversorgungseinrichtung eine Verdichteranordnung gemäß einem der Ansprüche 1 bis 6 aufweist.

10. Fahrzeug nach Anspruch 9, **dadurch gekennzeichnet, dass** der erste Verdichter (1) mechanisch in den Antriebsstrang eingebunden ist und der zweite Verdichter (2) elektrisch in das Bordnetz eingebunden ist.

11. Fahrzeug nach Anspruch 9 oder 10, **dadurch gekennzeichnet, dass** die Druckluftversorgungseinrichtung mindestens einen Druckluftbehälter zur Speicherung von Druckluft mit Enddruck aufweist und der Medienaustritt (122) der stromabwärts letzten Verdichterstufe (12) des ersten Verdichters (1) pneumatisch mit dem mindestens einen Druckbehälter verbunden ist.

12. Fahrzeug nach einem der Ansprüche 9 bis 11, **dadurch gekennzeichnet, dass** der zweite Verdichter (2) automatisch zugeschaltet wird, wenn der kumulierte Druckluftbedarf der Druckluftverbraucher einen vorgebbaren Schwellwert überschreitet.

## Claims

1. Compressor arrangement for compressing a volume flow of a compressible medium from an initial pressure to a final pressure which is higher than the initial pressure, comprising
• a multi-stage first compressor (1) for compressing a first partial volume flow of the compressible medium from the initial pressure to the final pressure with at least one upstream first compressor stage (11) and at least one downstream second compressor stage (12),
• wherein each compressor stage (11, 12) has a media inlet (111, 121) for drawing in the medium and a media outlet (112, 122) for discharging the medium, and
• wherein the media outlet (112) of a first compressor stage (11) is connected to the media inlet (121) of the downstream next second compressor stage (12) by an intermediate chamber (13) and an intermediate pressure of the first partial volume flow is respectively established in each intermediate chamber (13),
**characterized in that**
the first compressor (1) is a two-stage piston compressor, and
a second compressor (2) is provided with at least one compressor stage, which has a media inlet (21) and a media outlet (22), for compressing a second partial volume flow of the medium to an intermediate pressure of the first partial volume flow, wherein at least one media outlet (22) of the second compressor (2) is connected to an intermediate chamber (13) of the first compressor (1).

2. Compressor arrangement according to Claim 1, **characterized in that** the second compressor (2) can be operated independently of the first compressor (1).

3. Compressor arrangement according to Claim 1 or 2, **characterized in that** the second compressor (2) is uncooled and unlubricated.

4. Compressor arrangement according to one of the preceding claims, **characterized in that** the second compressor (2) can be operated at a rotation speed which is at least double that of the rotation speed of the first compressor (1).

5. Compressor arrangement according to one of the preceding claims, **characterized in that** the first compressor (1) is mechanically or electrically or hydraulically or pneumatically driven.

6. Compressor arrangement according to one of the preceding claims, **characterized in that** the second compressor (2) is a single-stage piston compressor.

7. Compressor arrangement according to one of the preceding claims, **characterized in that** the second compressor (2) is mechanically or electrically or hydraulically or pneumatically driven.

8. Compressor arrangement according to one of the preceding claims, **characterized in that** the first compressor (1) is mechanically driven and the second compressor (2) is electrically driven.

9. Vehicle with wheels, comprising
• a drive train with a drive assembly for providing mechanical and electrical power, which drive assembly is connected to the wheels of the vehicle by torque transmission means,
• a compressed-air supply device which can be operated using the provided power and also
• compressed-air consumers which are connected to the compressed-air supply device,
**characterized in that** the compressed-air supply device has a compressor arrangement according to one of Claims 1 to 6.

10. Vehicle according to Claim 9, **characterized in that** the first compressor (1) is mechanically incorporated into the drive train and the second compressor (2) is electrically incorporated into the on-board electrical system.

11. Vehicle according to Claim 9 or 10, **characterized in that** the compressed-air supply device has at least one compressed-air vessel for storing compressed air at the final pressure and the media outlet (122) of the downstream last compressor stage (12) of the first compressor (1) is pneumatically connected to the at least one pressure vessel.

12. Vehicle according to one of Claims 9 to 11, **characterized in that** the second compressor (2) is automatically switched on when the accumulated compressed-air requirement of the compressed-air consumers exceeds a prespecifiable threshold value.

## Revendications

1. Agencement de compresseur pour la compression d'un débit volumique d'un milieu compressible d'une pression de départ à une pression finale plus élevée par rapport à la pression de départ, comprenant
- un premier compresseur à plusieurs étages (1) pour comprimer un premier débit volumique partiel du milieu compressible de la pression de départ à la pression finale, comprenant au moins un premier étage de compresseur (11) disposé en amont et au moins un deuxième étage de compresseur (12) disposé en aval,
- chaque étage de compresseur (11, 12) présentant une entrée de milieu (111, 121) pour l'aspiration du milieu et une sortie de milieu (112, 122) pour l'éjection du milieu, et
- la sortie de milieu (112) d'un premier étage de compresseur (11) étant connectée à l'entrée de milieu (121) du deuxième étage de compresseur suivant en aval (12) par une chambre intermédiaire (13) et à chaque fois une pression intermédiaire du premier débit volumique partiel s'établissant dans chaque chambre intermédiaire (13),
**caractérisé en ce que**
le premier compresseur (1) est un compresseur à piston à deux étages, et
un deuxième compresseur (2) est prévu avec au moins un étage de compresseur présentant une entrée de milieu (21) et une sortie de milieu (22) pour la compression d'un deuxième débit volumique partiel du milieu à une pression intermédiaire du premier débit volumique partiel, au moins une sortie de milieu (22) du deuxième compresseur (2) étant connectée à une chambre intermédiaire (13) du premier compresseur (1).

2. Agencement de compresseur selon la revendication 1, **caractérisé en ce que** le deuxième compresseur (2) peut fonctionner indépendamment du premier compresseur (1).

3. Agencement de compresseur selon la revendication 1 ou 2, **caractérisé en ce que** le deuxième compresseur (2) n'est pas refroidi et n'est pas lubrifié.

4. Agencement de compresseur selon l'une quelconque des revendications précédentes, **caractérisé en ce que** le deuxième compresseur (2) peut fonctionner avec une vitesse de rotation qui est au moins deux fois plus grande que la vitesse de rotation du premier compresseur (1).

5. Agencement de compresseur selon l'une quelconque des revendications précédentes, **caractérisé en ce que** le premier compresseur (1) est entraîné mécaniquement ou électriquement ou hydrauliquement ou pneumatiquement.

6. Agencement de compresseur selon l'une quelconque des revendications précédentes, **caractérisé en ce que** le deuxième compresseur (2) est un compresseur à piston à un étage.

7. Agencement de compresseur selon l'une quelconque des revendications précédentes, **caractérisé en ce que** le deuxième compresseur (2) est entraîné mécaniquement ou électriquement ou hydrauliquement ou pneumatiquement.

8. Agencement de compresseur selon l'une quelconque des revendications précédentes, **caractérisé en ce que** le premier compresseur (1) est entraîné mécaniquement et le deuxième compresseur (2) est entraîné électriquement.

9. Véhicule à roues, comprenant
- une chaîne cinématique avec un groupe motopropulseur pour fournir de la puissance mécanique et électrique, qui est connecté par des moyens de transfert de couple aux roues du véhicule,
- un dispositif d'alimentation en air comprimé pouvant fonctionner avec la puissance fournie et
- des consommateurs d'air comprimé connectés au dispositif d'alimentation en air comprimé,
**caractérisé en ce que** le dispositif d'alimentation en air comprimé présente un agencement de compresseur selon l'une quelconque des revendications 1 à 6.

10. Véhicule selon la revendication 9, **caractérisé en ce que** le premier compresseur (1) est intégré mécaniquement dans la chaîne cinématique et le deuxième compresseur (2) est intégré électriquement dans le réseau de bord.

11. Véhicule selon la revendication 9 ou 10, **caractérisé en ce que** le dispositif d'alimentation en air comprimé présente au moins un réservoir d'air comprimé pour le stockage d'air comprimé à la pression finale et la sortie de milieu (122) du dernier étage de compresseur en aval (12) du premier compresseur (1) est connectée pneumatiquement à l'au moins un réservoir de pression.

12. Véhicule selon l'une quelconque des revendications 9 à 11, **caractérisé en ce que** le deuxième compresseur (2) est mis en marche automatiquement lorsque le besoin en air comprimé cumulé des consommateurs d'air comprimé dépasse une valeur seuil prédéfinissable.
